# FASCICULE DE BREVET EUROPEEN

(11) **EP 2 917 078 B1**
(45) Date de publication et mention de la délivrance du brevet: **06.12.2017**
(21) Numéro de dépôt: 13785554.0
(22) Date de dépôt: 14.10.2013
(51) Int. Cl.: B60T 5/00, B62D 35/02, B62D 35/00

(54) **ECRAN AERODYNAMIQUE INFERIEUR DE BOUCLIER AVANT D'UN VEHICULE AUTOMOBILE**
AERODYNAMISCHE UNTERBAU-BODENPLATTE FÜR DEN VORDEREN BEREICH EINES FAHRZEUGS
LOWER AERODYNAMIC SCREEN OF A FRONT SHIELD OF A MOTOR VEHICLE

(30) Priorité: 12.11.2012 FR 1260745
(43) Date de publication de la demande: 16.09.2015
(73) Titulaire: Renault S.A.S., 92100 Boulogne-Billancourt (FR)
(72) Inventeur: PALLU, Gilles, F-78770 Andely (FR)
(86) Numéro de dépôt international: PCT/FR2013/052445
(87) Numéro de publication internationale: WO 2014/072598

(56) Documents cités:
- WO-A1-2012/084251
- DE-A1- 4 229 945
- DE-A1-102009 050 967
- FR-A1- 2 959 195
- FR-A1- 2 959 473

## Description

### Domaine de l'invention :

La présente invention concerne un écran aérodynamique inférieur de bouclier avant d'un véhicule automobile. L'invention se rapporte plus précisément à un tel écran aérodynamique comportant des guides d'air latéraux conformés pour canaliser de l'air passant sous l'écran aérodynamique en direction des freins à disques associés aux roues avant du véhicule. Un tel écran est connu du document WO 2012/084251 A.

### Etat de la technique :

De nombreux véhicules commercialisés sont pourvus d'un écran aérodynamique inférieur, également dénommé « convergent inférieur » de bouclier avant. De tels écrans visent à éviter les phénomènes de recirculation d'air en dessous du véhicule pour un meilleur aérodynamisme et limiter les perturbations de flux d'air allant jusqu'à l'ensemble de refroidissement du groupe motopropulseur. L'écran est situé derrière le bouclier, en partie inférieure de celui-ci et s'étend sensiblement sur toute sa largeur.

Il est également connu de prévoir des guides d'air latéraux sur cet écran aérodynamique permettant de canaliser une partie de l'air s'écoulent sous l'écran en direction des freins à disque associés aux roues avant du véhicule. Ces guides d'air sont également dénommés « écopes de frein » par l'homme de l'art. Un guide d'air est donc situé en amont de chaque frein à disque, par rapport au sens d'écoulement de l'air relativement au véhicule.

Selon les configurations de véhicule, il est parfois nécessaire de libérer le passage d'air dans ces guides ou écopes de frein, par exemple lorsque le bouclier est dépourvu d'une lame inférieure souple. A l'inverse sur d'autres configurations de véhicule, il est nécessaire de fermer ce guide d'air, typiquement lorsque le bouclier est pourvu d'une lame inférieure souple. Ceci implique de gérer différents modèles d'écrans aérodynamiques, ce qui engendre des coûts de fabrications importants et ne favorise pas une réduction de la diversité (plusieurs pièces à concevoir, plusieurs moules à réaliser, approvisionnement double et sélection du type d'écran à monter sur chaque véhicule).

### But de l'invention :

L'invention vise à pallier tout ou partie des inconvénients précédents en proposant un écran aérodynamique inférieur de bouclier avant d'un véhicule qui soit adapté à tout type de véhicule.

### Objet de l'invention :

A cet effet, l'invention a pour objet un écran aérodynamique inférieur de bouclier avant d'un véhicule automobile comportant des guides d'air latéraux conformés pour canaliser de l'air passant sous l'écran aérodynamique en direction des freins à disques avant du véhicule, chaque guide d'air étant délimité par deux parois latérales sensiblement verticales et par une paroi supérieure reliée aux bords supérieurs des parois latérales, le guide d'air étant pourvu en aval, relativement à la direction d'écoulement de l'air, d'une fenêtre délimitée par les bords arrière des parois latérales et de la paroi supérieure par laquelle l'air débouche en direction des freins à disques, le guide d'air comprenant en outre un volet mobile entre une position d'obturation de la fenêtre et une position en retrait de la fenêtre, caractérisé en ce que chaque volet est maintenu sélectivement dans la position d'obturation ou dans la position en retrait par des moyens d'agrafage ou des moyens de clippage.
Un écran unique selon l'invention est donc adaptable à tout type de véhicule, les guides d'air pouvant sélectivement être positionnés dans deux configurations permettant d'obturer ou non le passage d'air en direction des freins à disque. L'invention permet de réduire significativement la diversité et le coût de fabrication.

Selon d'autres caractéristiques avantageuses de l'invention :
- chaque volet est articulé sur le bord arrière de la paroi supérieure, notamment par une charnière film,
- chaque volet comporte une partie centrale venant en vis-à-vis de la fenêtre de façon à l'obturer et des parties latérales en saillie latéralement de la partie centrale, ces parties latérales venant en appui plan contre des flans inférieurs de chaque guide situés latéralement de part et d'autre de la fenêtre, lorsque le volet est dans la position d'obturation, le volet étant maintenu dans cette position par des agrafes solidarisant deux à deux les parties latérales du volet et les flans inférieurs du guide.
- chaque volet comporte des pattes de fixation latérales conformées dans le prolongement longitudinal des parties latérales et de façon sensiblement perpendiculaire à la partie centrale, ces pattes de fixation latérales venant en appui contre des flans supérieurs conformés sur le guide lorsque le volet est dans la position en retrait de la fenêtre, le volet étant maintenu dans cette position par des agrafes solidarisant deux à deux les pattes de fixation du volet et les flans supérieurs du guide.
- le volet dans la position en retrait de la fenêtre est retourné au dessus du guide autour de son articulation, sa partie principale étant en appui contre la paroi supérieure du guide, du côté opposé à la zone d'écoulement de l'air,
- les flans supérieurs du guide sont ménagés sur des conformations en saillie au dessus de la paroi supérieure,
- la fenêtre de chacun des guides est inscrite dans un plan sensiblement vertical,
- la paroi supérieure du guide est inclinée par rapport à l'horizontale, les parois latérales ayant une forme générale triangulaire, de sorte que le volume délimité par ces parois a une forme générale prismatique, et
- l'écran aérodynamique est réalisé en matière plastique injectée.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective d'un écran aérodynamique inférieur de bouclier avant d'un véhicule selon l'invention,
- la figure 2 représente un détail de la figure 1 illustrant uniquement la zone d'un guide d'air en position de démoulage,
- la figure 3 est une vue du guide d'air de la figure 2, dont le volet est dans une position en retrait vis-à-vis de la fenêtre, et
- la figure 4 est une vue du guide d'air de la figure 2, dont le volet est dans une position d'obturation de la fenêtre.

Dans la description qui suit, les directions sont indiquées en référence au repère orthogonal XYZ classiquement utilisé dans la conception d'un véhicule dans lequel X désigne la direction longitudinale du véhicule, orienté vers l'arrière, Y la direction transversale, orientée vers la droite, et Z la direction verticale, vers le haut. Les notions « avant », « arrière » sont indiquées en référence à l'orientation longitudinale avant-arrière du véhicule.
Par ailleurs, le terme « sensiblement » indique qu'une petite variation est possible par rapport aux dimensions ou directions indiquées, de quelques centimètres ou degrés.

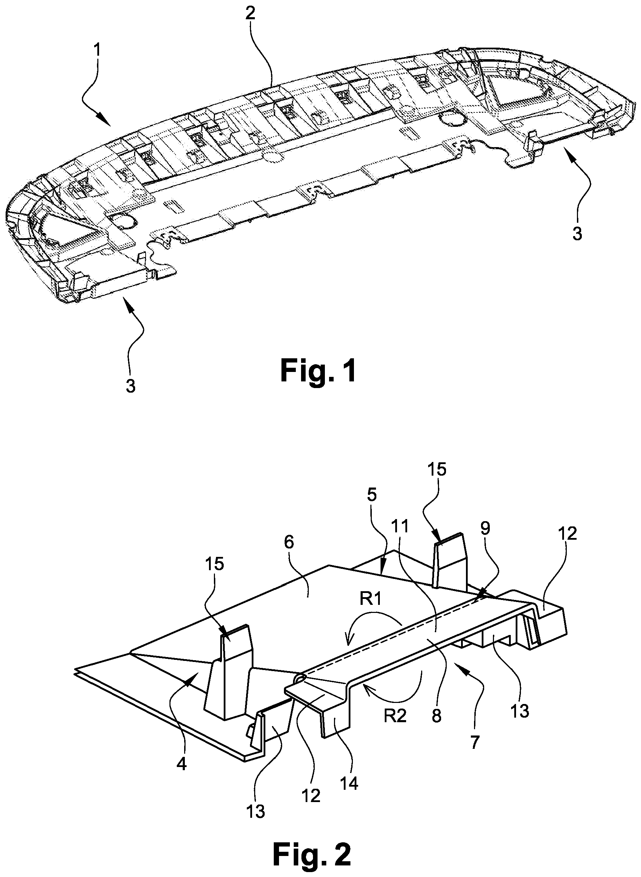

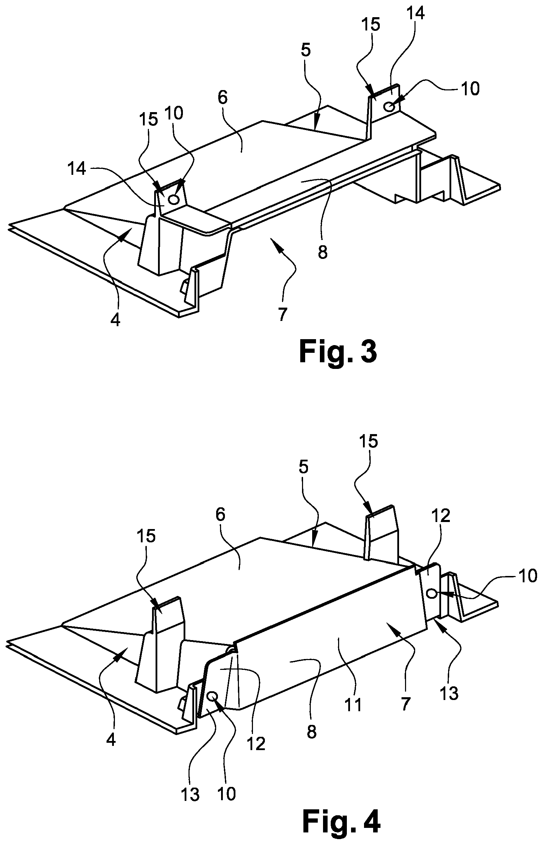

On a représenté à la figure 1 une vue d'ensemble d'un écran aérodynamique 1 (ou « convergent ») selon l'invention. Cet écran est situé derrière le bouclier avant d'un véhicule automobile et en partie inférieure de celui-ci. Il est orienté de façon sensiblement horizontale. Son bord avant 2 est ajusté sur la paroi intérieure du bouclier (ce dernier n'étant pas représenté).
L'écran 1 s'étend sur toute la largeur du bouclier et comporte à l'arrière et dans ses parties latérales des guides d'air 3 (ou « écopes ») conformés pour canaliser de l'air passant sous l'écran aérodynamique en direction des freins à disques avant (non représentés) du véhicule. La figure 2 est une vue agrandie d'un détail de l'écran de la figure 1 illustrant spécifiquement un guide d'air 3. Celui-ci définit un canal d'écoulement de l'air situé sous le guide. Le guide comporte deux parois latérales 4, 5 sensiblement verticales et une paroi supérieure 6 reliée aux bords supérieurs des parois latérales. Le guide d'air 3 est pourvu en aval, relativement à la direction d'écoulement de l'air, d'une fenêtre 7 délimitée par les bords arrière des parois latérales 4, 5 et de la paroi supérieure 6. Cette fenêtre a typiquement la forme générale d'un rectangle par lequel l'air s'échappe du guide d'air 3 lorsque le passage est libre. Cette fenêtre 7 est orientée de façon sensiblement verticale.
Selon le mode de réalisation illustré sur les figures, la paroi supérieure 6 du guide est inclinée par rapport à l'horizontale, les parois latérales 4, 5 ayant une forme générale triangulaire, de sorte que le volume délimité par ces parois 4-6 a une forme générale prismatique. Cette inclinaison est typiquement comprise entre 10 et 45°, par exemple de l'ordre de 30°. L'air cheminant sous l'écran dans la zone de chaque guide 3 peut donc remonter progressivement dans l'épaisseur de l'écran aérodynamique 1 au fur et à mesure qu'il progresse vers l'arrière du véhicule, de façon à être dirigé vers les freins à disques.
Selon l'invention, le guide d'air 3 comprend un volet 8 mobile entre une position d'obturation de la fenêtre 7 et une position en retrait de la fenêtre 7. Ces deux positions du volet 8 sont respectivement représentées aux figures 4 et 3. La position « en retrait » de la fenêtre signifie que le volet 8 est rétracté ou escamoté en dehors de la zone d'écoulement de l'air lorsque celui-ci traverse la fenêtre 7.
Le volet 8 est articulé sur le bord arrière de la paroi supérieure 6, typiquement par une charnière film 9 (figure 2).
On note que l'écran 1 est réalisé en matière plastique injectée. Le volet 8 de chaque guide 3 en sortie de moule est globalement inscrit dans un plan sensiblement perpendiculaire au plan de la fenêtre 7, comme représenté à la figure 2. En sortie de moule, le volet 8 est sensiblement parallèle à l'orientation générale de l'écran 1 aérodynamique.
Le volet 8 est basculé depuis sa configuration de sortie de moule (figure 2) soit vers la position en retrait de la fenêtre 7 (figure 3), soit vers la position d'obturation de la fenêtre 7 (figure 4) en lui imprimant une rotation autour de la charnière film 9, respectivement suivant le sens des flèches R1 ou R2, tel qu'indiqué à la figure 2. La rotation suivant la flèche R1 est typiquement d'un angle supérieur ou égal à 30°. La rotation suivant la flèche R2 est typiquement d'un angle sensiblement égal à 90°.
Chaque volet 8 est maintenu sélectivement dans la position d'obturation ou dans la position en retrait par des moyens d'agrafage 10. Dans une variante de réalisation non représentée de l'invention, les moyens d'agrafage peuvent être remplacés ou complétés par des moyens de clippage assurant la fixation définitive du volet 8 ou son prémaintien dans la position souhaitée.
Ces moyens d'agrafage 10 solidarisent des zones spécifiques du volet 8 et d'une partie fixe du guide d'air comme exposé ci-après.
Chaque volet 8 comporte une partie centrale 11 venant en vis-à-vis de la fenêtre 7 de façon à l'obturer lorsque le volet est dans la position d'obturation (figure 4). Le volet 8 comporte également des parties latérales 12 en saillie latéralement, c'est-à-dire suivant la direction Y, de la partie centrale 11. Lorsque le volet 8 est dans la position d'obturation, comme illustré à la figure 4, les parties latérales 12 viennent en appui plan contre des flans inférieurs 13 conformés sur chaque guide 3 de part et d'autre de la fenêtre 7 suivant la direction Y. Les flans inférieurs 13 sont parallèles à la fenêtre 7. Ces flans inférieurs sont orientés de façon sensiblement perpendiculaire au plan de l'écran 1. Le volet 8 est maintenu dans cette position d'obturation par des agrafes 10 solidarisant deux à deux les parties latérales 12 du volet 8 et les flans inférieurs 13 du guide 3.
Chaque volet 8 comporte également des pattes de fixation 14 latérales conformées dans le prolongement longitudinal des parties latérales 12. Ces pattes de fixation 14 sont conformées de façon sensiblement perpendiculaire à la partie centrale 11 et aux parties latérales 12. Lorsque le volet 8 est dans la position en retrait de la fenêtre 7 comme illustré à la figure 3, permettant le passage de l'air au travers de cette fenêtre 7, les pattes de fixation 14 coopèrent en appui contre des flans supérieurs 15 conformés sur le guide 3. Le volet 8 est maintenu dans cette position en retrait par des agrafes 10 solidarisant deux à deux les pattes de fixation 14 du volet 8 et les flans supérieurs 15 du guide d'air 3.
Les flans supérieurs 15 du guide d'air 3 sont ménagés sur des conformations en saillie au dessus de la paroi supérieure 6. Ces flans supérieurs 15 sont disposés devant les flans inférieurs 13 et au-dessus de ceux-ci.
On note que le volet 8 en position en retrait de la fenêtre est retourné au dessus du guide 3 autour de son articulation matérialisée par la charnière film 9. Dans cette position, la partie principale 11 du volet 8 se dispose de façon sensiblement parallèle, ou même en appui contre la paroi supérieure 6 du guide 3, du côté opposé à la zone d'écoulement de l'air, située quant à elle sous la paroi supérieure 6.
Bien entendu, l'invention n'est pas limitée aux modes ou variantes de réalisation décrits précédemment et comprends tous les équivalents techniques de ces moyens correspondants à l'objet des revendications annexées.

## Revendications

1. Ecran aérodynamique (1) inférieur de bouclier avant d'un véhicule automobile comportant des guides d'air (3) latéraux conformés pour canaliser de l'air passant sous l'écran aérodynamique en direction des freins à disques avant du véhicule, chaque guide d'air (3) étant délimité par deux parois latérales (4, 5) sensiblement verticales et par une paroi supérieure (6) reliée aux bords supérieurs des parois latérales (4, 5), le guide d'air (3) étant pourvu en aval, relativement à la direction d'écoulement de l'air, d'une fenêtre (7) délimitée par les bords arrière des parois latérales (4, 5) et de la paroi supérieure (6) par laquelle l'air débouche en direction des freins à disques, le guide d'air (3) comprenant en outre un volet (8) mobile entre une position d'obturation de la fenêtre (7) et une position en retrait de la fenêtre (7), **caractérisé en ce que** chaque volet (8) est maintenu sélectivement dans la position d'obturation ou dans la position en retrait par des moyens d'agrafage (10) ou des moyens de clippage.

2. Ecran aérodynamique selon la revendication 1, **caractérisé en ce que** chaque volet (8) est articulé sur le bord arrière de la paroi supérieure (6), notamment par une charnière film (9).

3. Ecran aérodynamique selon la revendication 2, **caractérisé en ce que** chaque volet (8) comporte une partie centrale (11) venant en vis-à-vis de la fenêtre (7) de façon à l'obturer et des parties latérales (12) en saillie latéralement de la partie centrale (11), ces parties latérales (12) venant en appui plan contre des flans inférieurs (13) de chaque guide (3) situés latéralement de part et d'autre de la fenêtre (7), lorsque le volet (8) est dans la position d'obturation, le volet (8) étant maintenu dans cette position par des agrafes (10) solidarisant deux à deux les parties latérales (12) du volet (8) et les flans inférieurs (13) du guide (3).

4. Ecran aérodynamique selon la revendication 3, **caractérisé en ce que** chaque volet (8) comporte des pattes de fixation (14) latérales conformées dans le prolongement longitudinal des parties latérales (12) et de façon sensiblement perpendiculaire à la partie centrale (11), ces pattes de fixation (14) latérales venant en appui contre des flans supérieurs (15) conformés sur le guide (3) lorsque le volet (8) est dans la position en retrait de la fenêtre (7), le volet (8) étant maintenu dans cette position par des agrafes (10) solidarisant deux à deux les pattes de fixation (14) du volet (8) et les flans supérieurs (15) du guide (3).

5. Ecran aérodynamique selon la revendication 4, **caractérisé en ce que** le volet (8) dans la position en retrait de la fenêtre (7) est retourné au dessus du guide (3) autour de son articulation, sa partie principale (11) étant en appui contre la paroi supérieure (6) du guide (3), du côté opposé à la zone d'écoulement de l'air.

6. Ecran aérodynamique selon la revendication 4 ou 5, **caractérisé en ce que** les flans supérieurs (15) du guide (3) sont ménagés sur des conformations en saillie au dessus de la paroi supérieure (6).

7. Ecran aérodynamique selon l'une quelconque des revendications précédentes, **caractérisé en ce que** la fenêtre (7) de chacun des guides (3) est inscrite dans un plan sensiblement vertical.

8. Ecran aérodynamique selon l'une quelconque des revendications précédentes, **caractérisé en ce que** la paroi supérieure (6) du guide (3) est inclinée par rapport à l'horizontale, les parois latérales (4, 5) ayant une forme générale triangulaire, de sorte que le volume délimité par ces parois a une forme générale prismatique.

9. Ecran aérodynamique selon la revendication 7 ou 8, **caractérisé en ce qu'**il est réalisé en matière plastique injectée.

## Patentansprüche

1. Untere aerodynamische Abschirmplatte (1) der Bugschürze eines Kraftfahrzeugs, welche seitliche Luftführungen (3) aufweist, die dafür ausgebildet sind, unter der aerodynamischen Abschirmplatte vorbeiströmende Luft in Richtung der vorderen Scheibenbremsen des Fahrzeugs zu kanalisieren, wobei jede Luftführung (3) von zwei im Wesentlichen vertikalen Seitenwänden (4, 5) und von einer oberen Wand (6), die mit den oberen Rändern der Seitenwände (4, 5) verbunden ist, begrenzt wird, wobei die Luftführung (3) stromabwärts, auf die Strömungsrichtung der Luft bezogen, mit einem von den hinteren Rändern der Seitenwände (4, 5) und der oberen Wand (6) begrenzten Fenster (7) versehen ist, durch das die Luft in Richtung der Scheibenbremsen ausströmt, wobei die Luftführung (3) außerdem eine Klappe (8) umfasst, die zwischen einer Position des Verschlusses des Fensters (7) und einer vom Fenster (7) zurückbewegten Position beweglich ist, **dadurch gekennzeichnet, dass** jede Klappe (8) durch Klammermittel (10) oder Einrastmittel selektiv in der Verschließposition oder in der zurückbewegten Position gehalten wird.

2. Aerodynamische Abschirmplatte nach Anspruch 1, **dadurch gekennzeichnet, dass** jede Klappe (8) am hinteren Rand der oberen Wand (6) angelenkt ist, insbesondere durch ein Folienscharnier (9).

3. Aerodynamische Abschirmplatte nach Anspruch 2, **dadurch gekennzeichnet, dass** jede Klappe (8) einen mittleren Teil (11), der in eine Position gegenüber dem Fenster (7) gelangt, so dass er es verschließt, und seitliche Teile (12), die vom mittleren Teil (11) zur Seite ragen, aufweist, wobei diese seitlichen Teile (12) an unteren Plättchen (13) jeder Führung (3), die sich seitlich beiderseits des Fensters (7) befinden, zur Anlage kommen, wenn sich die Klappe (8) in der in der Verschließposition befindet, wobei die Klappe (8) in dieser Position durch Halteklammern (10) gehalten wird, welche die seitlichen Teile (12) der Klappe (8) und die unteren Plättchen (13) der Führung (3) paarweise fest miteinander verbinden.

4. Aerodynamische Abschirmplatte nach Anspruch 3, **dadurch gekennzeichnet, dass** jede Klappe (8) seitliche Befestigungslaschen (14) aufweist, die in der Längsverlängerung der seitlichen Teile (12) und im Wesentlichen senkrecht zum mittleren Teil (11) angeformt sind, wobei diese seitlichen Befestigungslaschen (14) an oberen Plättchen (15), die an die Führung (3) angeformt sind, zur Anlage kommen, wenn sich die Klappe (8) in der vom Fenster (7) zurückbewegten Position befindet, wobei die Klappe (8) in dieser Position durch Halteklammern (10) gehalten wird, welche die Befestigungslaschen (14) der Klappe (8) und die oberen Plättchen (15) der Führung (3) paarweise fest miteinander verbinden.

5. Aerodynamische Abschirmplatte nach Anspruch 4, **dadurch gekennzeichnet, dass** die Klappe (8) in der vom Fenster (7) zurückbewegten Position um ihr Gelenk auf die Oberseite der Führung (3) zurückgeklappt ist, wobei ihr Hauptteil (11) auf der dem Strömungsbereich der Luft gegenüberliegenden Seite an der oberen Wand (6) der Führung (3) anliegt.

6. Aerodynamische Abschirmplatte nach Anspruch 4 oder 5, **dadurch gekennzeichnet, dass** die oberen Plättchen (15) der Führung (3) an Anformungen ausgebildet sind, die oben auf der oberen Wand (6) vorstehen.

7. Aerodynamische Abschirmplatte nach einem der vorhergehenden Ansprüche, **dadurch gekennzeichnet, dass** das Fenster (7) jeder der Führungen (3) in einer im Wesentlichen senkrechten Ebene liegt.

8. Aerodynamische Abschirmplatte nach einem der vorhergehenden Ansprüche, **dadurch gekennzeichnet, dass** die obere Wand (6) der Führung (3) bezüglich der Horizontalen geneigt ist, wobei die seitlichen Wände (4, 5) eine allgemein dreieckige Form aufweisen, derart, dass das von diesen Wänden begrenzte Volumen eine allgemein prismatische Form aufweist.

9. Aerodynamische Abschirmplatte nach Anspruch 7 oder 8, **dadurch gekennzeichnet, dass** sie aus spritzgegossenem Kunststoff hergestellt ist.

## Claims

1. Lower aerodynamic screen (1) of a front shield of a motor vehicle comprising lateral air guides (3) shaped to channel the air passing beneath the aerodynamic screen towards the front disc brakes of the vehicle, each air guide (3) being defined by two substantially vertical lateral walls (4, 5) and by an upper wall (6) linked to the upper edges of the lateral walls (4, 5), the air guide (3) being provided, downstream in the direction of air flow, with a window (7) defined by the rear edges of the lateral walls (4, 5) and the upper wall (6), from which the air emerges towards the disc brakes, the air guide (3) further comprising a flap (8) that is movable between a position blocking the window (7) and a position in which it is retracted from the window (7), **characterized in that** each flap (8) is held selectively in the blocking position or in the retracted position by stapling means (10) or clipping means.

2. Aerodynamic screen according to Claim 1, **characterized in that** each flap (8) is articulated on the rear edge of the upper wall (6), notably by a film hinge (9).

3. Aerodynamic screen according to Claim 2, **characterized in that** each flap (8) has a central portion (11) facing the window (7) such as to block same, and lateral portions (12) projecting laterally from the central portion (11), these lateral portions (12) bearing flat against the lower blanks (13) of each guide (3) located laterally on either side of the window (7), when the flap (8) is in the blocking position, the flap (8) being held in this position by staples (10) rigidly joining the lateral portions (12) of the flap (8) and the lower blanks (13) of the guide (3) in pairs.

4. Aerodynamic screen according to Claim 3, **characterized in that** each flap (8) has lateral attachment lugs (14) that are formed on the longitudinal prolongation of the lateral portions (12) and that are substantially perpendicular to the central portion (11), these lateral attachment lugs (14) bearing against the upper blanks (15) formed on the guide (3) when the flap (8) is in the position retracted from the window (7), the flap (8) being held in this position by staples (10) rigidly joining the attachment lugs (14) of the flap (8) and the upper blanks (15) of the guide (3) in pairs.

5. Aerodynamic screen according to Claim 4, **characterized in that** the flap (8) in the position retracted from the window (7) is turned above the guide (3) about the articulation of same, the main portion (11) of same bearing against the upper wall (6) of the guide (3), on the side opposite the air flow zone.

6. Aerodynamic screen according to Claim 4 or 5, **characterized in that** the upper blanks (15) of the guide (3) are arranged on formations projecting above the upper wall (6).

7. Aerodynamic screen according to any one of the preceding claims, **characterized in that** the window (7) of each of the guides (3) is contained within a substantially vertical plane.

8. Aerodynamic screen according to any one of the preceding claims, **characterized in that** the upper wall (6) of the guide (3) is inclined from the horizontal, the lateral walls (4, 5) having a generally triangular shape, such that the volume defined by these walls is generally prismatic.

9. Aerodynamic screen according to Claim 7 or 8, **characterized in that** it is made of injected plastic.
